Europäisches Patentamt

European Patent Office

Office européen des brevets

(11) Publication number: **0 333 054 B1**

## EUROPEAN PATENT SPECIFICATION

(45) Date of publication of patent specification: **01.06.94** (51) Int. Cl.$^5$: **H02P 5/40**

(21) Application number: **89104256.6**

(22) Date of filing: **10.03.89**

(54) **Control system for controlling revolution speed of electric motor.**

(30) Priority: **11.03.88 JP 58000/88**
**04.10.88 JP 250509/88**

(43) Date of publication of application:
**20.09.89 Bulletin 89/38**

(45) Publication of the grant of the patent:
**01.06.94 Bulletin 94/22**

(84) Designated Contracting States:
**DE ES FR GB**

(56) References cited:
**EP-A- 0 121 792**
**EP-A- 0 175 154**
**EP-A- 0 214 301**
**EP-A- 0 306 922**

**CONFERENCE RECORD OF THE 1986 IEEE
INDUSTRY APPLICATIONS SOCIETY ANNUAL
MEETING 1986, DENVER, US pages 80 - 85;
R.D. LORENZ ET AL: "SYNTHESIS OF A
STATE VARIABLE MOTION CONTROLLER
FOR HIGH PERFORMANCE FIELD ORIENTED
INDUCTION MACHINE DRIVES"**

(73) Proprietor: **MEIDENSHA KABUSHIKI KAISHA
1-17, Ohsaki 2-chome
Shinagawa-ku Tokyo 141(JP)**

(72) Inventor: **Mizuno, Takayuki
5, Oshibana
Nishihiwajima-cho
Nishikasugai-gun Aichi-ken(JP)**
Inventor: **Ichioka, Tadashi
1955, Mitsui
Tanyo-cho
Ichinomiya-shi Aichi-ken(JP)**

(74) Representative: **Dipl.-Phys.Dr. Manitz
Dipl.-Ing.Dipl.-Wirtsch.-Ing. Finsterwald
Dipl.-Phys. Rotermund Dipl.-Chem.Dr. Heyn
B.Sc.(Phys.) Morgan
Postfach 22 16 11
D-80506 München (DE)**

## Description

The present invention relates generally to a control system for controlling revolution speed of an electric motor, such as an induction motor. More specifically, the invention relates to a motor speed control system with an improved precision in speed control by compensating error factors which may otherwise cause error is motor speed control.

In typical known technologies, vector control technologies have also been employed in the motor speed control. It is basic idea of the vector control is to divide a primary current into an excitation current and a secondary current to control independently of each other. The flux of the excitation current and the vector of the secondary current are so established as to cross perpendicularly to each other. For improving response characteristics and precision in vector control, interference between the secondary flux component and secondary current component is avoided. This interference avoidance technology has been disclosed in Japanese Patent First (unexamined) Publication 59-165982, for example. A similar vector control technology is also disclosed in EP-A-0 121 752.

In such vector control, basic electric equation illustrating the induction motor by two axes d - q rotating at electric angular velocity $\omega$ as follow:

$$
\begin{bmatrix} V_1 d \\ V_1 q \\ 0 \\ 0 \end{bmatrix} =
\begin{bmatrix}
R_1 + L_1 P & -\omega L_1 & MP & -\omega M \\
\omega L_1 & R_1 + L_1 P & \omega M & MP \\
MP & -\omega_s M & R_2 + L_2 P & -\omega_s L_2 \\
\omega_s M & MP & \omega_s L_2 & R_2 + L_2 P
\end{bmatrix}
\begin{bmatrix} i_1 d \\ i_1 q \\ i_2 d \\ i_2 q \end{bmatrix}
\qquad \dots (1)
$$

On the other hand, the torque T can be illustrated by the following equation

$$T = K \times (i_2 d \times i_1 q - i_2 q \times i_1 d) \qquad (2)$$

where $V_1 d$, $V_1 q$ are primary voltage of d axis and q axis;
$i_1 d$, $I_1 q$ are primary current of d axis and q axis;
$i_2 d$, $I_2 q$ are secondary current of d axis and q axis;
$R_1$, $R_2$ are primary and secondary resistances;
$L_1$, $L_2$ are primary and secondary inductances;
M is relative inductance of primary and secondary inductances;
P is d/dt
$\omega_s$ is slip frequency; and
K is constant.

In the equation set forth above, the q axis is set as the axis of the secondary current and d axis is set as the axis of the flux. Mutual interference of the secondary flux and the secondary current is compensated in order to derive the primary voltages $V_1 d$ and $V_1 q$ based on the excitation current command $i_O{}^*$ and torque current command $i_T{}^*$. In the practical vector control, angular velocity $\omega_r$ of a rotor in the electric motor is monitored by means of a pick-up. The monitored angular velocity $\omega_r$ is compared with the speed command $\omega^*$ to derive the torque current command $i_T{}^*$. Based on this torque current command $i_T{}^*$, the excitation current command $i_O{}^*$, and secondary time constant $T_2$, slip frequency $\omega_s$ is derived by the following equation:

$$\omega_s = i_T{}^*/(\tau_2 \times i_O{}^*)$$

Then, a power source angular frequency $\omega_0$ is derived by adding the slip frequency $\omega_s$ derived as above to the angular velocity $\omega_r$ of the rotor of the motor. Then, sin wave signal $\mathrm{SIN}\omega_0$ and cos wave signal $\mathrm{COS}\omega_0 t$

2

respectively having power source frequency $\omega_O$ are produced. Utilizing the sin wave signal $SIN\omega Ot$ and the cos wave signal $COS\omega Ot$, the voltage signal $v_1d$ and $V_1q$ for the axes d - q is derived on the basis of the excitation current command $i_o{}^*$ and the torque current command $i_T{}^*$. Theses primary voltages $v_1d$ and $V_1q$ are 2/3 phase converted to generate three phase voltages $ea^*$, $eb^*$ and $ec^*$. PWM control for the inverter is thus performed by the three phase voltages $ea^*$, $eb^*$ and $ec^*$ and a triangular wave in a known manner.

A further system for controlling rotary speed of an induction motor and in which use is made of vector control technology is disclosed in EP-A-0 214 301. In this system the excitation current command and a secondary current command are resolved respectively into vector components of excitation magnetic flux and vector components in the torque direction. The resolution is based on a torque current command for the motor and an excitation magnetic flux command determined in response to the motor, so that a linear output torque can be produced by these commands. A primary current command of the motor is obtained by synthesizing these vector values. In this system the above resolution into vector components permits linear control of output torque in response to a torque command without requiring special torque measuring equipment.

Such vector control is generally successful to improve the response characteristics at a satisfactory level, however, due to the presence of core or iron loss, which is included in the current vector, the primary current in the braking mode becomes excessively smaller than the normal value in relation to the primary current in the motoring mode. This clearly affects precision in motor speed control.

## SUMMARY OF THE INVENTION

Therefore, it is an object of the present invention to provide a control system for controlling revolution speed of an electric motor with improved response characteristics and/or precision.

Another and more specific object of the invention is to avoid influence of core loss in motor speed control so as to achieve high precision level in control.

These objects are met according to one aspect of the invention by a motor speed control system for an induction motor, which comprises an induction motor, a motor drive system for applying power to drive the motor;

a sensor for detecting rotary speed of the motor and producing a motor speed indicative signal; and

a vector controller for controlling a flux-axis primary current $I1_q$, a torque-axis primary current $I1_d$ and slip frequency $\omega s$ to establish the following condition:

$$I1_d = -\{(Rm^2 + \omega^2 ML_2)/(Rm^2 + \omega^2 M^2)\} \times I_T{}^* - \{\omega MRm/(Rm^2 + \omega^2 M^2)\} \times I_o{}^*$$
$$I1_q = \{\omega^2 M^2/(Rm^2 + \omega^2 M^2)\} \times I_o{}^* + \{(Rm\omega(M - L_2)/(Rm^2 + \omega^2 M^2)\} \times I_T{}^*$$
$$\omega s = (R_2/M) \times (I_T{}^*/I_o{}^*)$$

where
Rm is an iron loss resistance
$I_T{}^*$ is torque current command;
$I_o{}^*$ is excitation current command;
M is a mutual inductance;
$L_2$ is a secondary inductance;
$R_2$ is a secondary resistance; and
$\omega$ is a power source angular frequency.

According to another aspect of the invention, a motor speed control system for an induction motor, comprises:
the induction motor
a motor drive circuit for applying power to drive the motor;
a sensor for detecting rotary speed of the motor and producing a motor speed indicative signal; and
a vector controller for controlling a flux-axis primary current $I1_q$, a torque-axis primary current $I1_d$ and slip frequency $\omega s$ to establish the following condition:

$$I1_d = -(L_2/M) \times I_T{}^* - \{\omega MRm/(Rm^2 + \omega^2 M^2)\} \times I_o{}^*$$
$$I1_q = -\{\omega^2 M^2/(Rm^2 + \omega^2 M^2)\} \times I_o{}^*$$
$$\omega s = (R_2/M) \times (I_T{}^*/I_o{}^*)$$

where
Rm is an iron loss resistance

3

EP 0 333 054 B1

$I_T^*$ is torque current command;

$I_o^*$ is excitation current command;

M is a mutual inductance;

$L_2$ is a secondary inductance;

$R_2$ is a secondary resistance; and

$\omega$ is a power source angular frequency.

According to a further aspect of the invention, a motor speed control system for an induction motor, comprises:

the induction motor

a motor drive circuit for applying power to drive the motor;

a sensor for detecting rotary speed of the motor and producing a motor speed indicative signal; and

a vector controller for controlling a flux-axis primary current $I1_q$, a torque-axis primary current $I1_d$ and slip frequency $\omega s$ to establish the following condition:

$I1_d = -(L_2/M) \times I_T^* - (\omega M Rm/(Rm^2 + \omega^2 M^2)\} \times I_o^*$

$I1_q = I_o^*$

$\omega s = (R_2/M) \times (I_T^*/I_o^*)$

where

Rm is an iron loss resistance

$I_T^*$ is torque current command;

$I_o^*$ is excitation current command;

M is a mutual inductance;

$L_2$ is a secondary inductance;

$R_2$ is a secondary resistance; and

$\omega$ is a power source angular frequency.

BRIEF DESCRIPTION OF THE DRAWINGS

The present invention will be understood more fully from the detailed description given herebelow and from the accompanying drawings of the preferred embodiments of the invention, which, however, should not be taken to limit the invention to the specific embodiments but are for explanation and understanding only.

In the drawings:

Fig. 1 is a block diagram of the preferred embodiment of a motor speed control system according to the present invention;

Fig. 2 is a block diagram of the second embodiment of a motor speed control system according to the present invention;

Fig. 3 is a block diagram of the third embodiment of a motor speed control system according to the present invention; and

Figs. 4(A) and 4(B) are graph showing variation of primary currents $I1_d$ and $I1_q$ in relation to operation frequency.

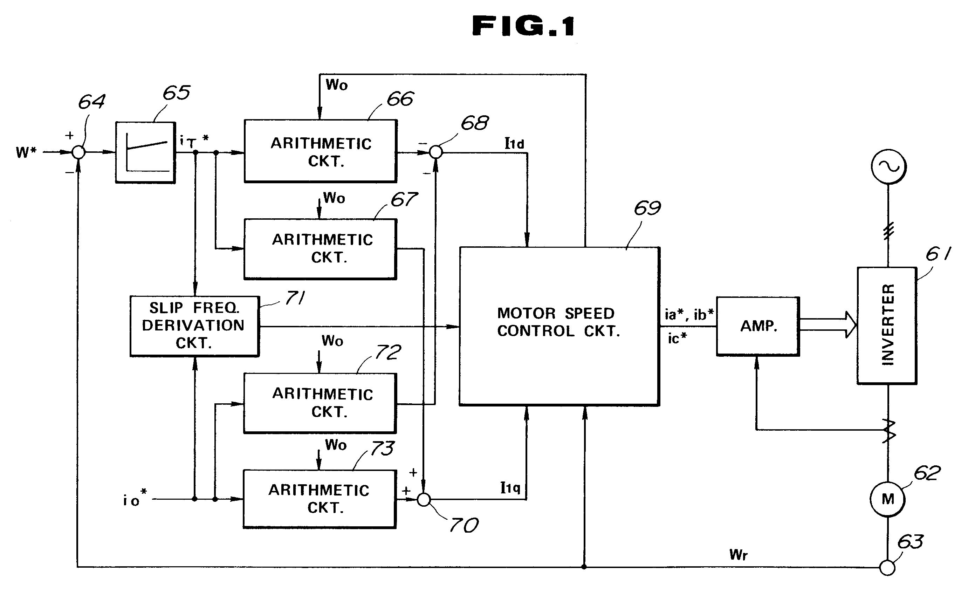

Referring now to the drawings, particularly to Fig. 1, there is shown the preferred embodiment of the motor speed control system, according to the invention.

The shown embodiment employs a vector control technology in controlling revolution speed of the electric motor. In the specific embodiment, a pulse-width-modulation (PWM) type inverter 61 is employed for controlling drive of an induction motor 62. The induction motor has a rotor, angular velocity $\omega r$ of which is monitored by means of a pick-up 63. The rotor angular velocity indicative output of the pick-up 63 is fed back to a subtractor 64, to which a motor speed command $\omega^*$ is input. The subtractor 64 derives an error between the motor speed command $\omega^*$ and the rotor angular velocity indicative signal $\omega r$ to input a speed error signal to a speed control amplifier 65 which comprises a proportional/integral (PI) amplifier. The speed control amplifier 65 outputs a torque current command $i_T^*$. The torque current command $i_T^*$ is fed to arithmetic circuits 66 and 67. The arithmetic circuit 66 is connected to an adder 68. The adder 68 is connected to a motor speed control circuit 69. On the other hand, the arithmetic circuit 67 is connected to an adder 70. The adder 70 is also connected to the the motor speed control circuit 69. The motor speed control circuit 69 also receives the rotor angular velocity indicative signal $\omega r$ from the pick-up 63.

The torque current command $i_T^*$ of the speed control amplifier 65 is also fed to a slip frequency derivation circuit 71. To the slip frequency derivation circuit 71 also receives an excitation current command $i_o^*$ which is also fed to arithmetic circuits 72 and 73. The arithmetic circuit 72 is connected to the adder 68.

4

On the other hand, the arithmetic circuit 73 is connected to the adder 70.

The motor speed control circuit 66 outputs a power source angular frequency indicative signal $\omega 0$ to the arithmetic circuits 66, 67, 72 and 73. The arithmetic circuit 66 performs arithmetic operation based on the torque current $i_T^*$ of the speed control amplifier 65 and the power source angular frequency indicative data $\omega 0$ according to the following equation:

$$i_T a = (Rm^2 + \omega 0^2 ML_2)/(Rm^2 + \omega 0^2 M^2) \times I_T^*$$

Similarly, the arithmetic circuit 67 performs arithmetic operation based on the torque current $i_T^*$ and the power source angular frequency indicative data $\omega 0$, according to the following equation:

$$i_T b = \{\omega 0 Rm(M - L_2)\}/(Rm^2 + \omega 0^2 M^2) \times i_T^*$$

The arithmetic circuit 73 performs arithmetic operation based on the excitation current command $I_o^*$ and the power source angular frequency indicative data $\omega 0$ according to the following equation:

$$I_o a = \omega 0^2 M^2/(Rm^2 + \omega^2 M^2) \times I_o^*$$

Similarly, the arithmetic circuit 72 performs arithmetic operation based on the torque current $I_o^*$ and the power source angular frequency indicative data $\omega 0$, according to the following equation:

$$I_o b = \omega 0 M Rm/(Rm^2 + \omega 0^2 M^2) \times I_o^*$$

The adder 68 adds the $i_T a$ and $I_o b$ to derive a current $I1_d$ and input the sum value to the motor speed control circuit 69. On the other hand, the adder 70 adds the $I_o a$ and $i_T b$ to derive a current $I1_q$ and input to the sum value to the motor speed control circuit 69. The motor control circuit 69 derives the amplitude $|I_1|$, the phase angle $\phi$, the power source angular frequency $\omega 0$ and current control signals $ia^*$, $ib^*$ and $ic^*$. The current control signals $ia^*$, $ib^*$ and $ic^*$ are derived by:

$ia^* = \sqrt{2} \times |I_1| \times \sin(\omega 0 t + \phi)$
$ib^* = \sqrt{2} \times |I_1| \times \sin(\omega 0 t + \phi - 2/3 \times \pi)$
$ic^* = \sqrt{2} \times |I_1| \times \sin(\omega 0 t + \phi + 2/3 \times \pi)$

The shown embodiment can simplify the process of arithmetic operations for deriving control currents. For instance, the following voltage equation is established with taking the core loss into account:

| $V_1 d$ | | $R_1 + Rm + L_1 P$ | $-\omega L_1$ | $Rm$ | $-\omega M$ | $I1_d$ |
|---|---|---|---|---|---|---|
| $V_1 q$ | $=$ | $\omega L_1$ | $R_1 + Rm$ | $\omega M$ | $Rm$ | $I1_q$ |
| $0$ | | $SRm$ | $-\omega sM$ | $R_2 + SRm$ | $-\omega sL_2$ | $I2_d$ |
| $0$ | | $\omega sM$ | $SRm$ | $\omega sL_2$ | $R_2 + SRm$ | $I2_q$ |

Here, the secondary flux $\lambda 2_d$ and $\lambda 2_q$ and torque T are derived by the following equations:

$\lambda 2_d = MI1_d + L_2 I2_d + (Rm/\omega) \times (I1_q + I2_q)$
$\lambda 2_q = MI1_q + L_2 I2_q + (Rm/\omega) \times (I1_d + I2_d)$
$T = K_T (M(I2_d I1q - I2_q I1_d) - (Rm/\omega) \times (I2_q I1_q + I2_q^2 + I2_d I1_d + I2_d^2)\}$

Therefore, by the presence of the core loss resistance, d-axis flux $\lambda 2_d$ is influenced by q-axis current $I1_q$

5

and $I2_q$, and q-axis flux $\lambda 2_q$ is influenced by d-axis current $I1_d$ and $I2_d$. Furthermore, the torque T includes torque component generated by the core or iron loss resistance Rm.

In order to avoid influence of the load on the secondary flux $\lambda 2_q$, $\lambda 2_q$ has to be constant. Therefore, the primary current $I1_q$ can be derived by:

$$I1_q = I_o + (Rm/\omega M) \times (I1_q + I2_d)$$

where $I_o$ is excitation current in no load condition (constant)

On the other hand, in order to make the torque proportional to the torque current $I_T$, the secondary current $I2_q$ has to be zero and the secondary flux $\lambda 2_d$ has to be one. From this, the primary current $I1_d$ is described by:

$$I1_d = -(L_2/M) \times I2_d - (Rm/\omega M) \times I1_d$$

According to the above, the primary current $I1_d$ can be derived by:

$$I1_d = -\{(Rm^2 + \omega^2 ML_2)/(Rm^2 + \omega^2 M^2)\} \times I2_d - \{\omega MRm/(Rm^2 + \omega^2 M^2)\} \times I_o \quad (1)$$

On the other hand, the primary current $I1_q$ can be derived by:

$$I1_q = \{\omega^2 M^2/(Rm^2 + \omega^2 M^2)\} \times I_o + \{(Rm\omega(M - L_2)/(Rm^2 + \omega^2 M^2)\} \times I2_d \quad (2)$$

By giving the foregoing condition, the following condition necessary for avoiding interference of the current and flux can be successfully established. Namely, by deriving the currents $I1_d$ and $I1_q$ on the basis of the excitation current $I_o$ and the torque current $I_T$ ($I2_d$), the magnitude of the secondary flux $\lambda 2_d$ and $\lambda 2_q$ and the torque satisfying the following condition can be obtained.

$$\lambda 2_d = 0;$$
$$\lambda 2_q = MI_o; \text{ and}$$
$$T = K_T \times M \times I_o \times I_T$$

In addition, the slip frequency $\omega s$ can be derived by:

$$\omega s = (R_2/M) \times (I_T/I_o)$$

As will be appreciated herefrom, the shown embodiment can perform precise control for the induction mode by taking the component of core loss into account.

In the foregoing equations (1) and (2), under the following condition:

rated output: 0.75 Kw - 4P
rated voltage: 200V - 50 Hz
$L_2 = 0.16H$
$R_2 = 1.85 \, \Omega$
$M = 0.153H$
$Rm = 6.15 \, \Omega$

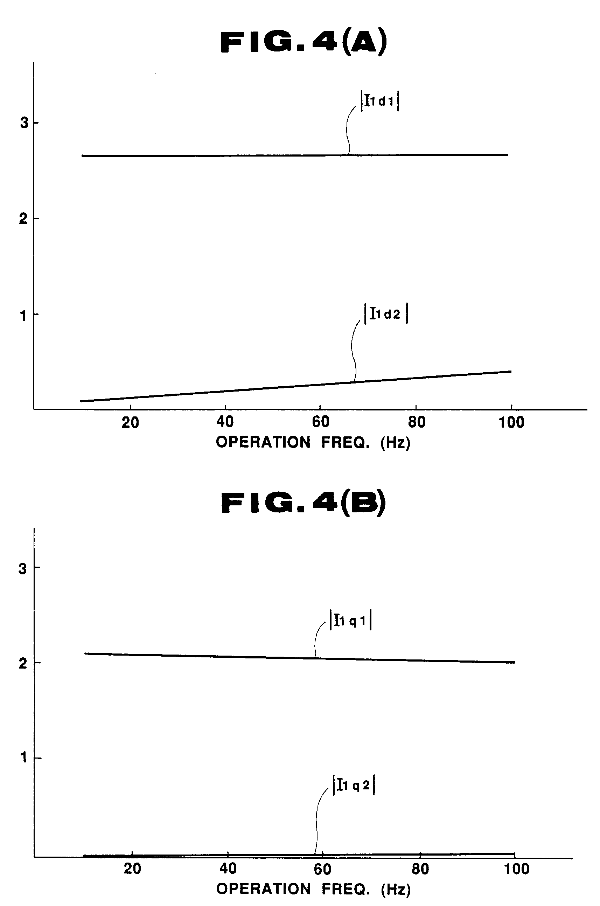

The currents $I1_d$ and $I1_q$ may have frequency characteristics as illustrated in Figs. 4(A) and 4(B). In Fig. 4-(A), there are shown the absolute value of the first term $I1_{d1} = \{(-Rm^2 + \omega^2 ML_2)/(Rm^2 + \omega^2 M^2)\} \times I2_d$ and the absolute value of the second term $I1_{d2} = (\omega MRm/(Rm^2 + \omega^2 M^2)\} \times I_o$ of the equation (1). Similarly, Fig. 4(B) shows variation of the absolute value of the first term $I1_{q1} = \{\omega^2 M^2/(Rm^2 + \omega^2 M^2)\} \times I_o$ and the second term $I1_{q2} \{Rm\omega(M - L_2)/(Rm^2 + \omega^2 M^2)\} \times I2_d$. As seen from the characteristics as shown in Figs. 4(A) and 4(B), it should be appreciated that the first term $I1_{d1}$ of the equation (1) is held constant irrespective of variation of the frequency $\omega$ and will not cause substantial change in response to the core loss. On the other hand, the second term $I1_{q2}$ of the equation (2) can be ignored. In comparision with the first term $I1_{q1}$ of the equation (2), the second term $I1_{d2}$ of the equation (1) is subject to greater influence.

Therefore, by taking the fact set forth above into account, the foregoing equations (1) and (2) can be modified as follows:

$$I1_d = -(L_2/M) \times I_T^* - \{\omega MRm/(Rm^2 + \omega^2 M^2)\} \times I_o^* \quad (3)$$

6

$$I1_q = -\{\omega^2 M^2/(Rm^2 + \omega^2 M^2)\} \times I_o^* \quad (4)$$

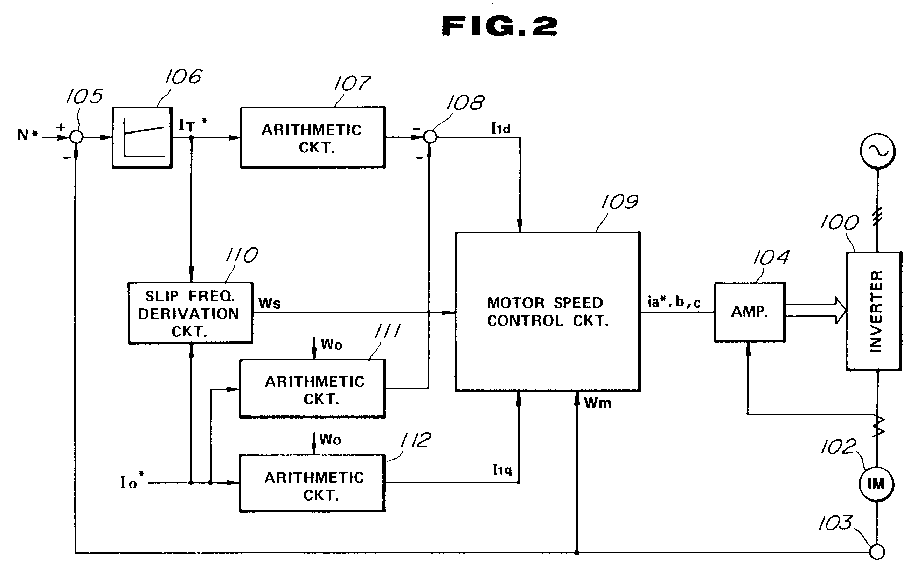

Fig. 2 shows the second embodiment of the motor speed control system according to the present invention, which implements the motor speed control according to the foregoing simplified equation.

In the shown embodiment, the pulse-width-modulation (PWM) type inverter 100 is employed for controlling drive of an induction motor 102. The induction motor has a rotor, angular velocity $\omega r$ of which is monitored by means of a pick-up 103. The rotor angular velocity indicative output of the pick-up 103 is fed back to a subtractor 105, to which a motor speed command N* is input. The subtractor 105 derives an error between the motor speed command N* and the rotor angular velocity indicative signal $\omega r$ to input a speed error signal to a speed control amplifier 106 which comprises a proportional/integral (PI) amplifier. The speed control amplifier 106 outputs a torque current command $i_T^*$ The torque current command $i_T^*$ is fed to arithmetic circuit 107. The arithmetic circuit 107 is connected to an adder 108. The adder 108 is connected to a motor speed control circuit 109.

The torque current command $i_T^*$ of the speed control amplifier 106 is also fed to a slip frequency derivation circuit 110. The slip frequency derivation circuit 110 also receives an excitation current command $i_o^*$ which is also fed to arithmetic circuits 111 and 112. The arithmetic circuit 111 is connected to the adder 108. On the other hand, the arithmetic circuit 112 is directly connected to the motor speed control circuit 109.

The motor speed control circuit 109 outputs a power source angular frequency indicative signal $\omega 0$ to the arithmetic circuits 107, 111 and 112. The arithmetic circuit 107 performs arithmetic operation based on the torque current $i_T^*$ of the speed control amplifier 109 and the power source angular frequency indicative data $\omega 0$ according to the following equation:

$$i_T a = (L_2/M) \times I_T^*$$

The arithmetic circuit 112 performs arithmetic operation based on the excitation current command $I_o^*$ and the power source angular frequency indicative data $\omega 0$ according to the following equation:

$$I_o a = \omega 0^2 M^2/(Rm^2 + \omega^2 M^2) \times I_o^*$$

Similarly, the arithmetic circuit 111 performs arithmetic operation based on the torque current $I_o^*$ and the power source angular frequency indicative data $\omega 0$, according to the following equation:

$$I_o b = \omega 0 M Rm/(Rm^2 + \omega 0^2 M^2) \times I_o^*$$

The adder 108 adds the $i_T a$ and $I_o b$ to derive a current $I1_d$ and input the sum value to the motor speed control circuit 109. The arithmetic circuit 112 is connected to the motor speed control circuit 109. The motor control circuit 109 derives the amplitude $|I_1|$, the phase angle $\phi$, the power source angular frequency $\omega 0$ and current control signals ia*, ib* and ic*.

As will be appreciated with utilizing the equations (3) and (4), the circuit construction can be substantially simplified in comparison with that of the foregoing embodiment without causing substantial degradation of precision.

Further simplification of the equation and circuit construction can be achieved by providing that $I1_q$ is equal to $I_o^*$.

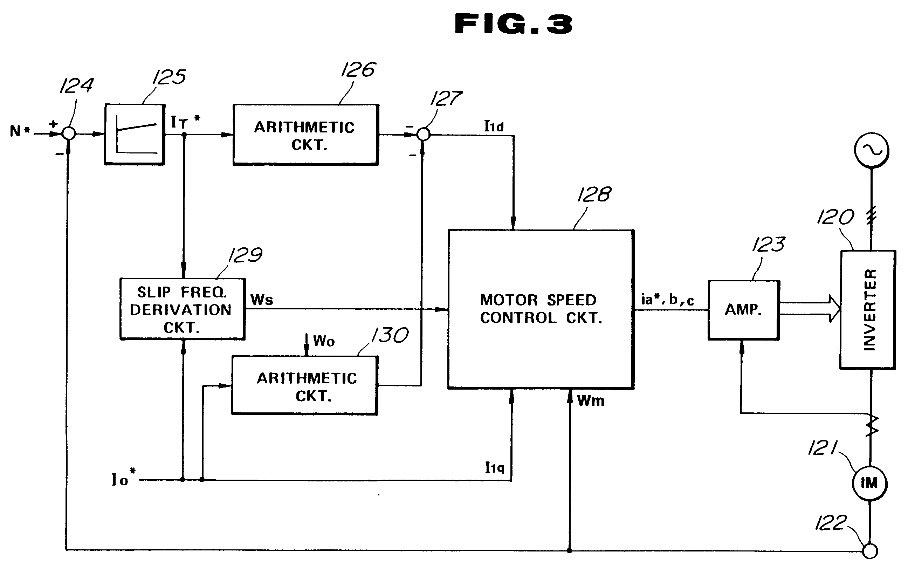

Fig. 3 shows the third embodiment of the motor speed control system according to the present invention, which implements the motor speed control achieving further simplification.

In the shown embodiment, the pulse-width-modulation (PWM) type inverter 120 is employed for controlling drive of an induction motor 121. The induction motor 121 has a rotor, angular velocity $\omega r$ of which is monitored by means of a pick-up 122. The rotor angular velocity indicative output of the pick-up 122 is fed back to a subtractor 124, to which a motor speed command N* is input. The subtractor 124 derives an error between the motor speed command N* and the rotor angular velocity indicative signal $\omega r$ to input a speed error signal to a speed control amplifier 125 which comprises a proportional/integral (PI) amplifier. The speed control amplifier 125 outputs a torque current command $i_T^*$. The torque current command $i_T^*$ is fed to arithmetic circuit 126. The arithmetic circuit 126 is connected to an adder 127. The adder 127 is connected to a motor speed control circuit 128.

The torque current command $i_T^*$ of the speed control amplifier 125 is also fed to a slip frequency derivation circuit 129. To the slip frequency derivation circuit 129 also receives an excitation current command $i_o^*$ which is also fed to arithmetic circuit 130. The arithmetic circuit 130 is connected to the adder 127.

The motor speed control circuit 125 outputs a power source angular frequency indicative signal $\omega0$ to the arithmetic circuits 126 and 130. The arithmetic circuit 126 performs arithmetic operation based on the torque current $i_T{}^*$ of the speed control amplifier 125 and the power source angular frequency indicative data $\omega0$ according to the following equation:

$$i_T a = (L_2/M) \times I_T{}^*$$

Similarly, the arithmetic circuit 130 performs arithmetic operation based on the torque current $i_T{}^*$ and the power source angular frequency indicative data $\omega0$, according to the following equation:

$$I_o b = \omega0 M Rm/(Rm^2 + \omega0^2 M^2) \times I_o{}^*$$

The adder 127 adds the $i_T a$ and $I_o b$ to derive a current $I1_d$ and input the sum value to the motor speed control circuit 128. The motor control circuit 128 derives the amplitude $|I_1|$, the phase angle $\phi$, the power source angular frequency $\omega0$ and current control signals $ia^*$, $ib^*$ and $ic^*$.

As will be appreciated by modifying the forgoing equation (4) as $I1_q = I_o{}^*$, substantial simplification of the circuit construction can be achieved with acceptable level of precision.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

**1.** A motor speed control system for an induction motor, comprising:
said induction motor,
a motor drive circuit (61) for applying power to drive the motor (62);
a sensor (63) for detecting rotary speed of the motor and producing a motor speed indicative signal; and
a vector controller for controlling a flux-axis primary current $I1_q$, a torque-axis primary current $I1_d$ and slip frequency $\omega s$ to establish the following condition:

$$I1_d = -\{(Rm^2 + \omega^2 M L_2)/(Rm^2 + \omega^2 M^2)\} \times I_T{}^* - \{\omega M Rm/(Rm^2 + \omega^2 M^2)\} \times I_o{}^*$$
$$I1_q = \{\omega^2 M^2/(Rm^2 + \omega^2 M^2)\} \times I_o{}^* + \{(Rm\omega(M - L_2)/(Rm^2 + \omega^2 M^2)\} \times I_T{}^*$$
$$\omega s = (R_2/M) \times (I_T{}^*/I_o{}^*)$$

where
Rm is an iron loss resistance;
$I_T{}^*$ is torque current command;
$I_o{}^*$ is excitation current command;
M is a mutual inductance;
$L_2$ is a secondary inductance;
$R_2$ is a secondary resistance; and
$\omega$ is a power source angular frequency.

**2.** A motor speed control system for an induction motor, comprising:
said induction motor,
a motor drive circuit (100) for applying power to drive the motor (102);
a sensor (103) for detecting rotary speed of the motor and producing a motor speed indicative signal; and
a vector controller (109) for controlling a flux axis primary current $I1_q$, a torque-axis primary current $I1_d$ and slip frequency $\omega s$ to establish the following condition:

$$I1_d = -(L_2/M) \times I_T{}^* - \{\omega M Rm/(Rm^2 + \omega^2 M^2)\} \times I_o{}^*$$
$$I1_q = -\{\omega^2 M^2/(Rm^2 + \omega^2 M^2)\} \times I_o{}^*$$
$$\omega s = (R_2/M) \times (I_T{}^*/I_o{}^*)$$

where

Rm is an iron loss resistance;

$I_T{}^*$ is torque current command;

$I_o{}^*$ is excitation current command;

M is a mutual inductance;

$L_2$ is a secondary inductance;

$R_2$ is a secondary resistance; and

$\omega$ is a power source angular frequency.

3.  A motor speed control system for an induction motor, comprising:

said induction motor,

a motor drive circuit (120) for applying power to drive the motor (121);

a sensor (122) for detecting rotary speed of the motor and producing a motor speed indicative signal; and

a vector controller (128) for controlling a flux axis primary current $I1_q$, a torque-axis primary current $I1_d$ and slip frequency $\omega s$ to establish the following condition:

$$I1_d = -(L_2/M) \times I_T{}^* - \{\omega MRm/(Rm^2 + \omega^2 M^2) \times I_o{}^*$$
$$I1_q = I_o{}^*$$
$$\omega s = (R_2/M) \times (I_T{}^*/I_o{}^*)$$

where

Rm is an iron loss resistance;

$I_T{}^*$ is torque current command;

$I_o{}^*$ is excitation current command;

M is a mutual inductance;

$L_2$ is a secondary inductance;

$R_2$ is a secondary resistance; and

$\omega$ is a power source angular frequency.

**Patentansprüche**

1.  Motordrehzahl-Regelsystem für einen Induktionsmotor, welches System umfaßt:

den Induktionsmotor,

eine Motoransteuer-Schaltung (61) zum Anlegen von Leistung zum Ansteuern des Motors (62);

einen Fühler (63) zum Erfassen der Drehgeschwindigkeit des Motors und zum Erzeugen eines für die Motordrehzahl bezeichnenden Signals; und

eine Vektorsteuerung zum Steuern eines Flußachsen-Primärstroms $I1_q$, eines Drehmomentachsen-Primärstroms $I1_d$ und einer Schlupffrequenz $\omega s$ zum Errichten der folgenden Bedingung:

$$I1_d = -\{(Rm^2 + \omega^2 M^2 L_2)\} \times I_T{}^* - \{\omega MRm/(Rm^2 + \omega^2 M^2)\} \times I_o{}^*$$
$$I1_q = \{\omega^2 M^2/Rm^2 + \omega^2 M^2)\} \times I_o{}^* + \{(Rm\omega(M - L_2)/(Rm^2 + \omega^2 M^2)\} \times I_T{}^*$$
$$\omega s = (R_2/M) \times (I_T{}^*/I_o{}^*),$$

wobei

Rm ein Eisenverlust-Widerstand ist;

$I_T{}^*$ ein Drehmomentstrom-Befehl ist;

$I_o{}^*$ ein Anregungsstrom-Befehl ist;

M eine Gegeninduktivität ist;

$L_2$ eine Sekundärinduktivität ist;

$R_2$ ein Sekundärwiderstand ist; und

$\omega$ eine Winkelfrequenz der Stromquelle ist.

2.  Motordrehzahl-Regelsystem für einen Induktionsmotor, welches System umfaßt:

den Induktionsmotor,

eine Motoransteuer-Schaltung (100) zum Anlegen von Leistung zum Ansteuern des Motors (102);

einen Fühler (103) zum Erfassen der Drehgeschwindigkeit des Motors und zum Erzeugen eines für die Motordrehzahl bezeichnenden Signals; und

eine Vektorsteuerung (109) zum Steuern eines Flußachsen-Primärstroms $I1_q$, eines Drehmomentachsen-Primärstroms $I1_d$ und einer Schlupffrequenz $\omega s$ zum Errichten der folgenden Bedingung:

$$I1_d = -(L_2/M) \times I_T^* - \{\omega^2 M^2/(Rm^2 + \omega^2 M^2)\} \times I_o^*$$
$$I1_q = \{\omega^2 M^2/Rm^2 + \omega^2 M^2)\} \times I_o^*$$
$$\omega s = (R_2/M) \times (I_T^*/I_o^*),$$

wobei

 Rm ein Eisenverlust-Widerstand ist;

 $I_T^*$ ein Drehmomentstrom-Befehl ist;

 $I_o^*$ ein Anregungsstrom-Befehl ist;

 M eine Gegeninduktivität ist;

 $L_2$ eine Sekundärinduktivität ist;

 $R_2$ ein Sekundärwiderstand ist; und

 $\omega$ eine Winkelfrequenz der Stromquelle ist.

3. Motordrehzahl-Regelsystem für einen Induktionsmotor, welches System umfaßt:

 den Induktionsmotor,

 eine Motoransteuer-Schaltung (120) zum Anlegen von Leistung zum Ansteuern des Motors (121);

 einen Fühler (122) zum Erfassen der Drehgeschwindigkeit des Motors und zum Erzeugen eines für die Motordrehzahl bezeichnenden Signals; und

 eine Vektorsteuerung (128) zum Steuern eines FlußachsenPrimärstroms $I1_q$, eines Drehmomentachsen-Primärstroms $I1_d$ und einer Schlupffrequenz $\omega s$ zum Errichten der folgenden Bedingung:

$$I1_d = -(L_2/M) \times I_T^* - \{\omega M Rm/(Rm^2 + \omega^2 M^2)\} \times I_o^*$$
$$I1_q = I_o^*$$
$$\omega s = (R_2/M) \times (I_T^*/I_o^*),$$

wobei

 Rm ein Eisenverlust-Widerstand ist;

 $I_T^*$ ein Drehmomentstrom-Befehl ist;

 $I_o^*$ ein Anregungsstrom-Befehl ist;

 M eine Gegeninduktivität ist;

 $L_2$ eine Sekundärinduktivität ist;

 $R_2$ ein Sekundärwiderstand ist; und

 $\omega$ eine Winkelfrequenz der Stromquelle ist.

**Revendications**

1. Système de commande de vitesse de moteur pour un moteur à induction, comprenant :

 ledit moteur à induction ;

 un circuit d'entraînement de moteur (61) pour appliquer de la puissance pour entraîner le moteur (62) ;

 un détecteur (63) pour détecter une vitesse de rotation du moteur et pour produire un signal indicatif de la vitesse du moteur ; et

 un contrôleur de vecteur pour commander un courant primaire d'axe de flux $I1_q$, un courant primaire d'axe de couple $I1_d$ et une fréquence de glissement $\omega s$ afin d'établir la condition suivante :

$$I1_d = - \{(Rm^2 + \omega^2 M L_2)/(Rm^2 + \omega^2 M^2)\} \times I_T^* - \{\omega M Rm/(Rm^2 + \omega^2 M^2)\} \times I_o^*$$
$$I1q = \{\omega^2 M^2/(Rm^2 + \omega^2 M^2)\} \times I_o^* + \{(Rm\omega(M - L_2)/(Rm^2 + \omega^2 M^2)\} \times I_T^*$$
$$\omega s = (R_2/M) \times (I_T^*/I_o^*)$$

où

 Rm est une valeur de résistance de perte par courant parasite ;

 $I_T^*$ est une commande de courant de couple ;

 $I_o^*$ est une commande de courant d'excitation ;

 M est une inductance mutuelle ;

10

$L_2$ est une inductance secondaire ;

$R_2$ est une valeur de résistance secondaire ; et

$\omega$ est une fréquence angulaire de source d'alimentation.

2. Système de commande de vitesse de moteur pour un moteur à induction, comprenant :

ledit moteur à induction ;

un circuit d'entraînement de moteur (100) pour appliquer de la puissance pour entraîner le moteur (102) ;

un détecteur (103) pour détecter une vitesse de rotation du moteur et pour produire un signal indicatif de la vitesse du moteur ; et

un contrôleur de vecteur (109) pour commander un courant primaire d'axe de flux $l1_q$, un courant primaire d'axe de couple $l1_d$ et une fréquence de glissement $\omega s$ afin d'établir la condition suivante :

$$l1_d = -(L_2/1M) \times l_T{}^* - \{\omega M Rm/Rm^2 + \omega^2 M^2)\} \times l_O{}^*$$
$$l1_q = -\{\omega^2 M^2/(Rm^2 + \omega^2 M^2)\} \times l_O{}^*$$
$$\omega s = (R_2/M) \times (l_T{}^*/l_O{}^*)$$

où

Rm est une valeur de résistance de perte par courant parasite ;

$l_T{}^*$ est une commande de courant de couple ;

$l_O{}^*$ est une commande de courant d'excitation ;

M est une inductance mutuelle ;

$L_2$ est une inductance secondaire ;

$R_2$ est une valeur de résistance secondaire ; et

$\omega$ est une fréquence angulaire de source d'alimentation.

3. Système de commande de vitesse de moteur pour un moteur à induction, comprenant :

ledit moteur à induction ;

un circuit d'entraînement de moteur (120) pour appliquer de la puissance pour entraîner le moteur (121) ;

un détecteur (122) pour détecter une vitesse de rotation du moteur et pour produire un signal indicatif de la vitesse du moteur ; et

un contrôleur de vecteur (128) pour commander un courant primaire d'axe de flux $l1_q$, un courant primaire d'axe de couple $l1_d$ et une fréquence de glissement $\omega s$ afin d'établir la condition suivante :

$$l1_d = -(L_2/M) \times l_T{}^* - \{\omega M Rm/Rm^2 + \omega^2 M^2)\} \times l_O{}^*$$
$$l1_q = l_O{}^*$$
$$\omega s = (R_2/M) \times (l_T{}^*/l_O{}^*)$$

où

Rm est une valeur de résistance de perte par courant parasite ;

$l_T{}^*$ est une commande de courant de couple ;

$l_O{}^*$ est une commande de courant d'excitation ;

M est une inductance mutuelle ;

$L_2$ est une inductance secondaire ;

$R_2$ est une valeur de résistance secondaire ; et

$\omega$ est une fréquence angulaire de source d'alimentation.

# FIG.1

# FIG.2

EP 0 333 054 B1

# FIG.3

EP 0 333 054 B1

# FIG. 4(A)

# FIG. 4(B)